# EUROPEAN PATENT APPLICATION

(11) **EP 1 583 036 A2**
(43) Date of publication of application: **05.10.2005**
(21) Application number: 05102145.9
(22) Date of filing: 18.03.2005
(51) Int. Cl.: G06T 11/60

(54) **Image layout method using a grid**

(30) Priority: 31.03.2004 US 815067
(71) Applicant: MICROSOFT CORPORATION, Redmond, Washington 98052-6399 (US)
(72) Inventor: Titov, Dmitry G., 98052, Redmond (US); Cooper, Kenneth B., 98052, Redmond (US); Young, Kenneth L., 98052, Redmond (US); Ovetchkine, Oleg V., 98052, Redmond (US); Faraday, Peter, 98052, Redmond (US); Fosler, Jessica L., 98052, Redmond (US); Lehenbauer, Daniel R., 98052, Redmond (US); Yuan, Jian, 98052, Redmond (US); Chrisope, Jeffrey T., 98052, Redmond (US)
(74) Representative: Grünecker, Kinkeldey, Stockmair & Schwanhäusser Anwaltssozietät

(57) **Abstract**

A layout resizes intelligently without complexity. Objects or elements are attached to a virtual grid of row and column gridlines, which are defined separately. The relationship between the objects and the grid is bi-directional so that moving one (gridline or object) will affect the other (object or gridline). In other words, expanding /collapsing the object will push the gridlines, and moving the gridline will expand /collapse the object. The virtual grid can be created before or after the objects to provide further flexibility. A child object can have its own virtual grid, which allows fine-grained control where desired.

## Description

### FIELD OF THE INVENTION

This invention relates in general to the field of computer graphics. More particularly, this invention relates to the layout of objects on a display.

### BACKGROUND OF THE INVENTION

When designing the layout of user interface elements (window regions, controls, etc.), a designer canvas is often used and elements (also referred to herein as objects) are dropped onto the canvas. However, as the application is built and the area covered by the canvas is resized, it becomes difficult to get all the elements to resize in an intelligent manner. Current approaches tend to be incomplete, complex, or opaque to the designer.

It is desirable to design a layout so that it resizes without the designer having to write code to make it happen. Creating an application layout that resizes intelligently is a problem that is currently approached by incomplete mechanisms, exceedingly complex mechanisms, or code that is inaccessible to a designer.

A conventional mechanism is canvas-style layouts. This type of layout provides an area on which new elements can be tacked, similar to putting notices on a bulletin board. As on a bulletin board, the objects are stationary once placed, unless the programmer explicitly moves them.

Another conventional mechanism is proportional-resize layouts. These layouts are the same as the canvas-style layouts, except the overall bulletin board is later considered as a single image that can be stretched proportionally. This type of layout is acceptable for a fixed-function user interface that is intended to grow larger with increasing screen size (simple games, for example), but is poor for cases where the screen could be better applied to showing greater information density (a word processing display, for example).

Table-style layouts are another conventional layout mechanism. These layouts are similar to those found in HTML. The available space is carved into distinct cells, where each cell is a container for its contents. Frequently, larger elements (images, for example) must be sliced between cells in order to create the desired layout.

Another type of layout mechanism is attachment-based layouts. In these layouts, each object is allowed to "attach" itself to sides of an overall canvas; if it attaches to the left and right, for example, then its width varies as the application is resized while keeping the margins fixed.

"Advanced" layouts such as Java's GridBag are also known. GridBag assigns positioning information to each child (including spanning information, and margins) and reasoning over all child data to produce a result. The GridBag container itself carries no information. The result is more functional than the previously-mentioned layouts, but is extremely difficult to tool (i.e., difficult to present in a clear and simple user interface).

"Springs and struts" is a conventional layout in which each object coordinate can effectively be defined as an expression from any other coordinate. For example, in a "springs and struts" environment, one could configure two elements to always be 10 pixels apart. While initially expressive, this mechanism bogs down quickly, particularly as the runtime has extremely involved recalculation requirements that are ultimately inappropriate for the task.

In view of the foregoing, there is a need for systems and methods that overcome the limitations and drawbacks of the prior art.

### SUMMARY OF THE INVENTION

The present invention is directed to a layout that resizes intelligently without complexity. Elements (i.e., objects) are attached to a virtual grid of row and column gridlines, which are defined separately. The relationship between objects and the grid is bi-directional so that moving one (gridline or object) will affect the other (object or gridline). In other words, expanding / collapsing the object will push the gridlines, and moving the gridline will expand / collapse the object. The virtual grid can be created before or after the objects to provide further flexibility. A child object can have its own virtual grid, which allows fine-grained control where desired.

Additional features and advantages of the invention will be made apparent from the following detailed description of illustrative embodiments that proceeds with reference to the accompanying drawings.

### BRIEF DESCRIPTION OF THE DRAWINGS

The foregoing summary, as well as the following detailed description of preferred embodiments, is better understood when read in conjunction with the appended drawings. For the purpose of illustrating the invention, there is shown in the drawings exemplary constructions of the invention; however, the invention is not limited to the specific methods and instrumentalities disclosed. In the drawings:

Figure 1 is a diagram of an exemplary grid canvas with objects in accordance with the present invention;

Figure 2 is a high level flow diagram of an exemplary method of generating a grid canvas in accordance with the present invention;

Figure 3 is a high level block diagram of an exemplary system in accordance with the present invention;

Figure 4 is a diagram of another exemplary grid canvas in accordance with the present invention;

Figure 5 is a diagram of another exemplary grid canvas in accordance with the present invention;

Figure 6 is a diagram of another exemplary grid canvas in accordance with the present invention;

Figure 7 shows an exemplary method of creating a grid canvas layout in accordance with the present invention;

Figure 8 is a diagram of another exemplary grid canvas in accordance with the present invention;

Figure 9 is an exemplary diagram of multiple overlapping objects in accordance with the present invention; and

Figure 10 is a block diagram showing an exemplary computing environment in which aspects of the invention may be implemented.

### DETAILED DESCRIPTION OF PREFERRED EMBODIMENTS

The present invention is directed to a layout in which objects are attached to a virtual grid of row and column gridlines, which are defined separately. The relationship between objects and grid is bi-directional so that expanding / collapsing the object will push the gridlines, and moving the gridline will expand / collapse the object. Such a layout mechanism is referred to herein as the "grid canvas" layout mechanism.

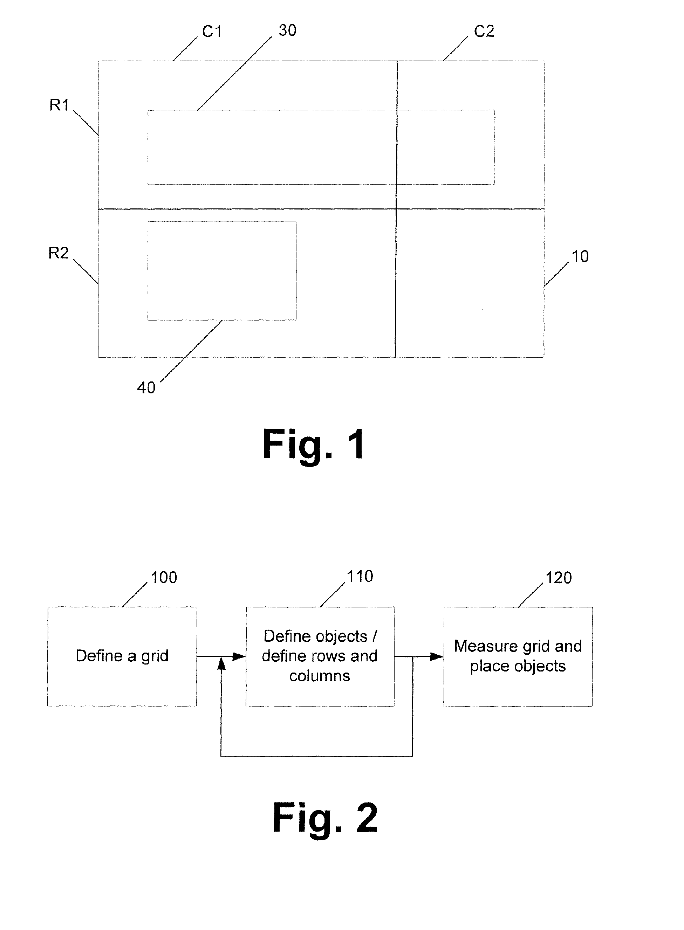

An exemplary grid canvas layout is shown in Figure 1. The grid canvas layout mechanism is a cooperation between the parent and the children. The parent 10 is effectively a canvas on which objects 30, 40 can be drawn on at will in any location, and objects remain where placed. At any time, the grid canvas 10 may be split into as many rows R and columns C as desired. Each child of the grid canvas maintains a grid bounding box, along with margins relative to that box. For example, the grid bounding box for object 30 is all of row R1 (i.e., R1C1:R1C2). Margin settings allow for multiple types of "attachment" within the grid bounding box, using appropriate offsets from the boundaries of the box. The rows R and columns C themselves are owned by the grid canvas parent 10, and can be sized in a conventional manner (e.g., fixed size, percent size, auto-size, weighted size).

The present invention divides a picture into virtual cells that only represent positions. Therefore, for example, the object 30 does not need to be broken into multiple cells, each needing to be moved by itself Instead, the object 30 spans several virtual cells on the underlying grid canvas 10. Moreover, objects may be overlapped. The gridlines are virtual and act as a coordinate system, and the virtual cells are merely manifestations of the coordinate system. The present invention breaks the dependencies of child cells of where it must be placed with respect to the gridlines.

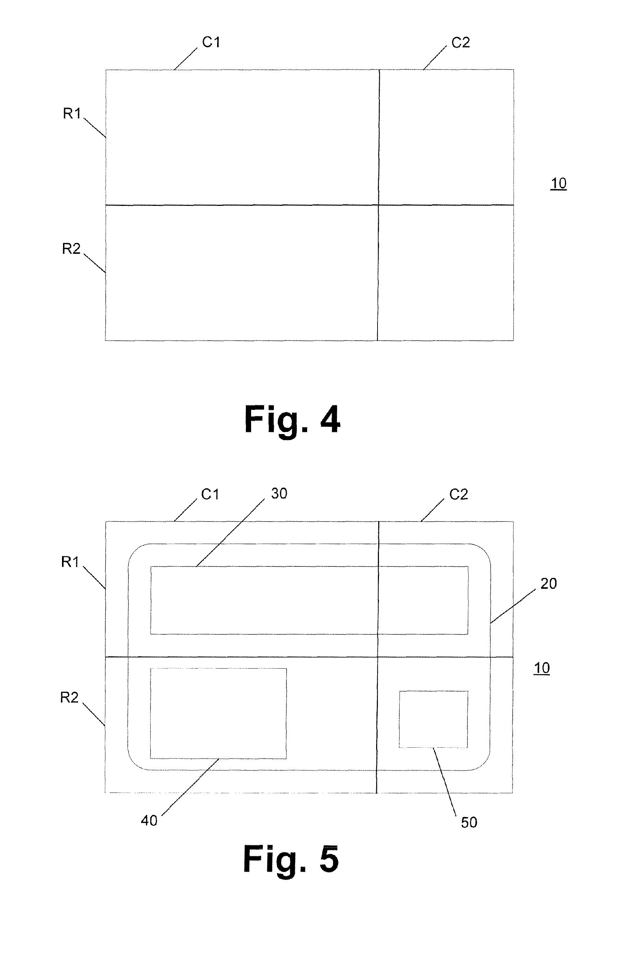

The present invention can be implemented in a user interface panel capable of calculating and arranging children in columns and rows. A child may be any object, such as a panel or control. The intersection of column and row gridlines forms a grid of slots. A child or object can occupy several adjacent grid slots (e.g., the object 30 occupies the slots or cells defined by row R1, column C1 and row R1, column C2). An object's layout behavior is determined by settings on the columns and rows that it spans. For example, a grid slot can be assigned a fixed size by specifying a pixel width value on the corresponding column and a pixel height value of the corresponding row. A column width can be calculated with respect to desired widths of children spanning through it. A row can be assigned a proportion of the remaining available space. Objects may overlap, as two or more children may occupy the same subset of layout slots (e.g., see objects 20 and 30 in Figure 5).

A child object may have properties, such as, but not limited to the following: four grid coordinates (the bounding box of grid cells), four margins of the boundary box, and the height and width of the object. The margins and height and width can be designated "auto" so that they take up as much space as is available to maintain the appropriate ratios and positions, for example. More particularly, for width and height, there are desirably various types of specifications: absolute (e.g., 100 pixels, 2 inches, etc.), percentage (e.g., 10 percent), auto (i.e., natural sizes), and star ("*") (e.g., *, 25*, etc.). Star is a specification to use the remaining space. If two columns are marked as "*", then the space for the two objects is divided in proportion to their star values. This is desirably a weight based distribution.

Figure 2 is a high level flow diagram of an exemplary method of generating a grid canvas. At step 100, the underlying grid or parent is created by specifying a virtual grid of row and column gridlines. Then the object or objects are defined, using the various properties and attributes that an object may have, at step 110. Rows and columns may also be defined at this time. A loop is provided until the definitions are complete. The grid is then measured and the objects are placed, at step 120. It is contemplated that the while a grid is declared before objects can be placed in it, the grid can be configured at any time before or after objects are placed within it.. For example, the objects can be laid out on a page first, and then the grid can be configured.

The layout container desirably begins as a one-row, one-column grid. The grid has a fixed number of rows and columns, but has no cells. The rows and columns can be fixed or stretchy. As objects are drawn, they are preferably given two types of attributes: row, rowspan, col, colspan to specify a bounding box of gridlines, and left, right, top, bottom, width, height. Objects are placed in the gridline bounding box.

Thus, the exemplary grid canvas provides for creation of rich dialog and component layouts. The feature set desirably includes laying out in columns and rows; overlapping; support for absolute, percentage, "to-content" and weighted proportions sizing of columns and rows; full control over a child's position; and sizing behavior.

Desirably, objects are arranged with respect to gridlines, in rows and columns. Rows and columns can be locked, and/or given a minimum size, for example. Objects can be placed in the grid such that they stretch according to the settings of the rows and columns it spans. Multiple objects can overlap, each using a different region of cells. Such an example is shown in Figure 5, described below. Preferably, grids are databindable, where the number of rows and columns is unknown.

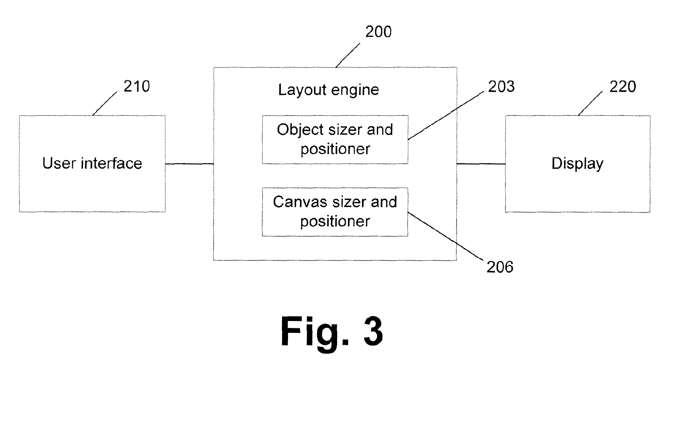

A system in accordance with the present invention comprises a layout engine that implements optimized algorithms and processes for determining object sizes and positions, and the grid's own columns' and rows' sizes and positions. As shown in Figure 3, at a high level, an exemplary layout engine 200 resides within a computer or in conjunction with a microprocessor or controller and is in communication with a user interface 210 and a display 220. The layout engine comprises routines 203, 206 for sizing and positioning the objects, and sizing and positioning the canvas, respectively.

Preferably, layout determinations can be made in two modes (independently in both dimensions: horizontal (width) and vertical (height)). A first exemplary mode is calculation to a pre-defined size (e.g., when the size is explicitly set by the layout author). In this case, the size is distributed among columns (rows) taking into account an object's natural sizes. A second exemplary mode is calculation to its natural size (e.g., when no explicit size if defined). In such a case, the natural size of the grid is determined, taking into account the object's natural sizes and size specifications on columns (rows), and preserving columns (rows) size proportions in case of percentage size specifications and weighted proportion size specifications.

### Runtime

The grid canvas is an element that may be used in a runtime system. The grid canvas 10 is divided into rows R and columns C, such as that shown in Figure 4. Although two rows R1, R2 and two columns C1, C2 are shown in Figure 4, it is contemplated that a grid canvas can be divided into any number of rows and columns. Each row and column desirably has sizing information on it (e.g., fixed, percentage, auto, or weighted).

Children objects may be placed anywhere over the parent grid canvas. Exemplary children are shown in Figure 5 as the four objects 20, 30, 40, 50. The objects 20 and 30 cover multiple cells (a row and a column are said to form a cell). The object 20 resides in rows R1 and R2 and columns C1 and C2, while the object 30 is disposed in row R1 and columns C1 and C2. The object 40 is completely within the cell formed by row R2 and column C1, and the object 50 is completely within the cell formed by row R2 and column C2.

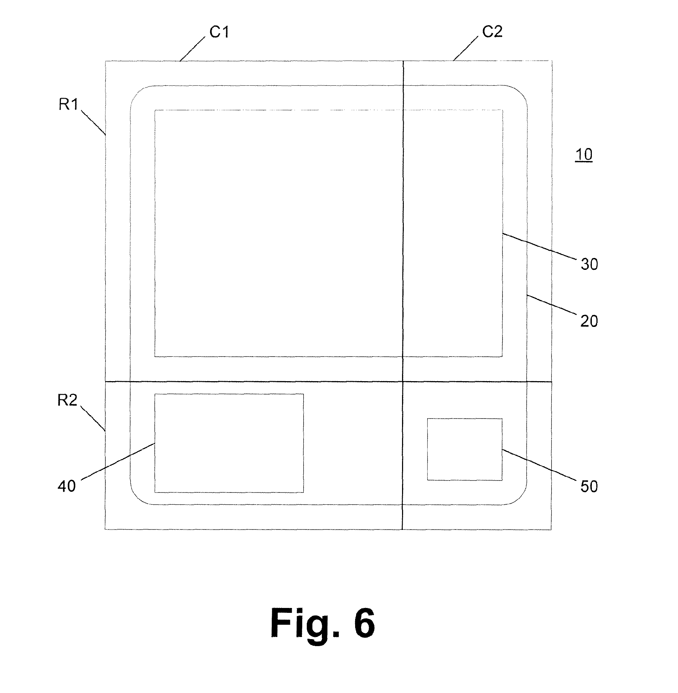

At this point, assume the bottom row R2 of the layout in Figure 5 is desired to have an absolute height whereas the top row R1 is desired to consume all remaining space. When this layout is resized taller, the desired result is shown in Figure 6. Note that row R2, and the objects or portions of objects contained therein, remain at their original fixed heights. On the other hand, row R1, and the objects or portions of objects contained therein, have been resized vertically, to cover the additional space in that direction. The relative proportions of objects and cells to each other remain the same in row R1 as in the original, unresized row R1.

Such a layout would be achieved by configuring rows/columns appropriately (e.g., bottom row height = "150 pixels"; top row height = "*", where "*" means to take a proportion of the available space after the fixed rows/columns have been accounted for; if no other row has a "*" value on it, then "*" will use the entire remaining space) and configuring object relationships to the grid, including margins. A coordinate system is used in which the cell defined by C1, R1 is (0,0); C2, R1 is (1,0); C1, R2 is (0,1); and C2, R2 is (1,1). Assuming that the distance between an edge of an object and the corresponding edge of a cell is the "margin" and the margin is defined in pixels or as auto, for example, the object relations can then be defined for the objects 20, 30, 40, 50 as follows:

Object 20: grid location = (0,0)-(1,1) (this means that the object spans cell (0,0) to cell (1,1), as shown); margin =(10,10,10,10) (this means that the distance from an edge in each direction to its corresponding grid cell edge is 10 pixels) (note that the drawings are not to scale); width = auto; height = auto.

Object 30: grid location = (0,0)-(1,0); margin = (20,20,20,10); width = auto; height = auto.

Object 40: grid location = (0,1)-(0,1); margin = (20,10,auto,20); width = fixed (e.g., 100); height = auto.

Object 50: grid location = (1,1)-(1,1); margin = (10,10,10,auto); width = auto; height = fixed (e.g., 40).

Desirably, explicit values denote explicit measurements, and auto values consume the remaining available space. It is contemplated that in various implementations, the margins could be specified for all sides, and then additional attachment flags could be added. Moreover, values requested by the child may not be achievable by the parent, in which case the grid canvas may handle overconstrained problems by returning an error message, for example, or revising the value so that it is valid, for example.

The runtime functions to measure the children objects, allocate row widths and column heights according to any constraints under which it is operating, and later to position the children objects based on how much space is available.

### Design Time

The design time process is the act of automatically creating a grid canvas layout using a minimum amount of user specification. The layout author or designer is provided with the ability to define the layout shape and the layout dynamic behavior.

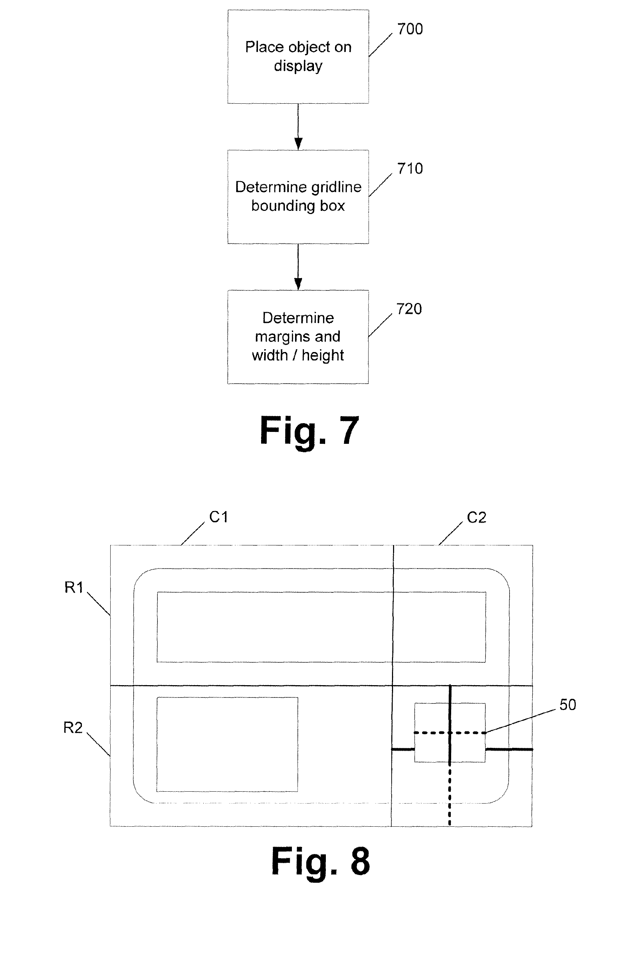

Figure 7 shows an exemplary method of creating a grid canvas layout in accordance with the present invention. At step 700, a designer places an object at a specific location on the display (e.g., in the user interface on the display). Its gridline bounding box is determined, at step 710. This maps to the grid location property described above. Then, by comparing the extents of this gridline bounding box with the desired position, appropriate margins and width/height can be determined, at step 720, e.g., according to a default scheme. An exemplary default scheme is one in which (1) if the specified location is entirely in the left half of the gridline box extents, an explicit left margin and width is set, and the right margin is set to auto; (2) if the specified location is entirely in the right half of the gridline box extents, an explicit right margin and width is set, and the left margin is set to auto; (3) if the specified location spans the centerline of the gridline box extents, an explicit left and right margin is set, and the width is set to auto; and (4) height and top/bottom margins are handled in an analogous manner.

Figure 8 shows an exemplary grid canvas which is useful to explain the above settings, in particular with respect to the object 50 in row R2, column C2. The fixed values are shown as solid lines, and the auto values are shown as dotted lines. By toggling any of the six positioning indicators shown (the height, width, and margins), a user could alter the positioning scheme, and replace any auto value with the fixed value currently in effect. The user may also adjust the gridline bounding box if desired, by moving the four external anchors to other gridlines as desired. As an object is moved or resized, its new position is re-evaluated and new values calculated, modulo any explicit desires the user has expressed. When a row or column is added or removed, nearby objects are recomputed, modulo any explicit desires the user has expressed.

An exemplary design method comprises determining the gridline bounding box of the object. If the top edge is above the midline, then its top margin is fixed. If the bottom edge is also above the midline, its height is fixed and the bottom margin is set to be dynamic. If, however, the bottom edge is below the midline, its bottom margin is fixed, and its height is set to be dynamic. Assignments are updated automatically as new gridlines are drawn.

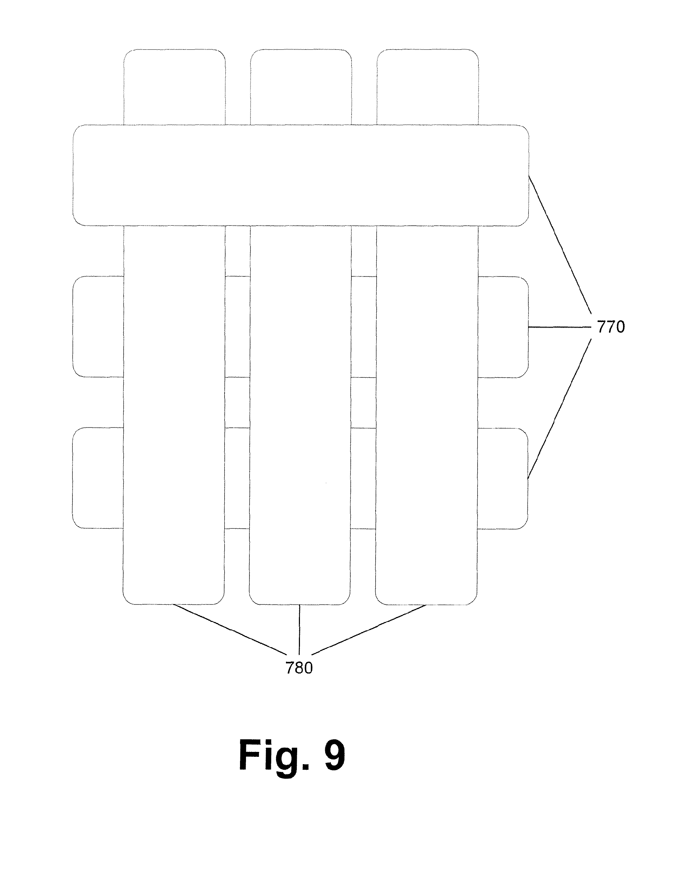

As an example, assume that there are gridlines that can be drawn on a scene, and objects can be drawn and modified normally (e.g., objects can span gridlines at will). In such an environment, the following exemplary solution is provided for the picture of multiple overlapping horizontal objects 770 and vertical object 780 shown in Figure 9 (in which "red" is provided as an exemplary color of the objects):

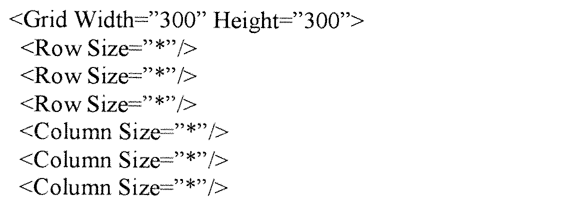

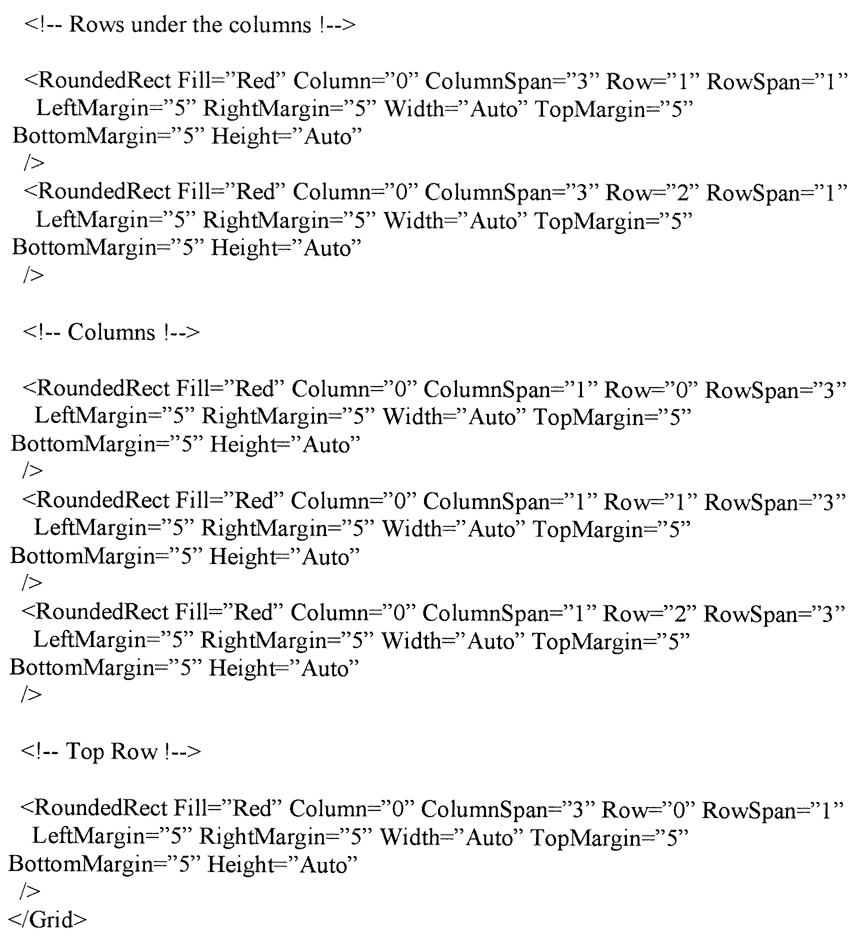

It is noted that column and row information comes first and the order of the children is the draw order. Moreover, each object has attached properties that describe the grid rectangle that the object fits inside. The margins are evaluated relative to the grid rectangle specified. Additional snapto information to control behavior during resize can be added. The system, having access to the gridline values, takes the rectangle relative to the grid bounding box and desirably the grid boundaries and offsets.

### Exemplary Computing Environment

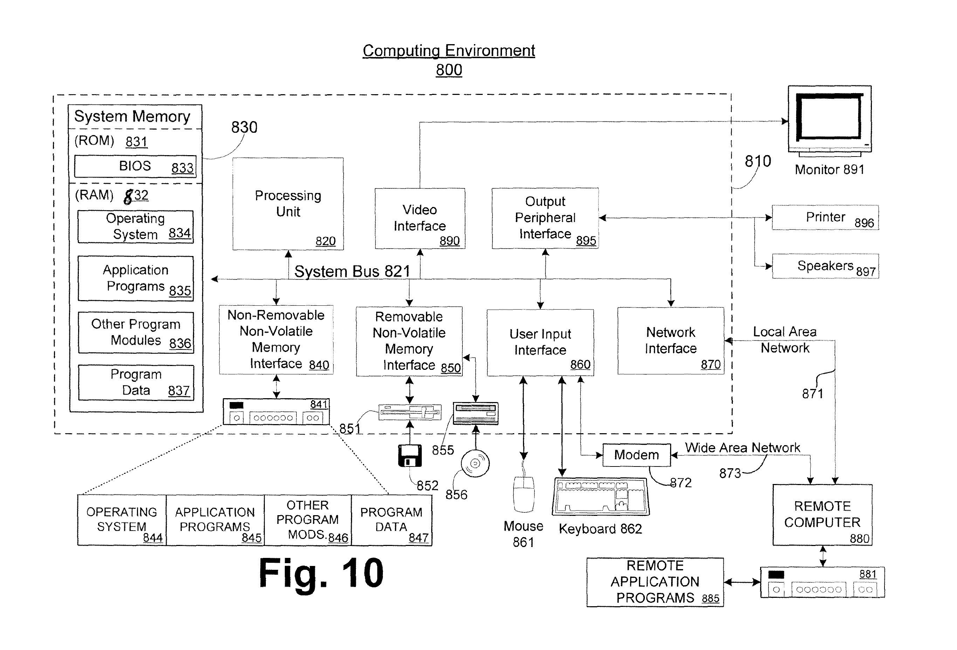

Figure 10 illustrates an example of a suitable computing system environment 800 in which the invention may be implemented. The computing system environment 800 is only one example of a suitable computing environment and is not intended to suggest any limitation as to the scope of use or functionality of the invention. Neither should the computing environment 800 be interpreted as having any dependency or requirement relating to any one or combination of components illustrated in the exemplary operating environment 800.

The invention is operational with numerous other general purpose or special purpose computing system environments or configurations. Examples of well known computing systems, environments, and/or configurations that may be suitable for use with the invention include, but are not limited to, personal computers, server computers, hand-held or laptop devices, multiprocessor systems, microprocessor-based systems, set top boxes, programmable consumer electronics, network PCs, minicomputers, mainframe computers, distributed computing environments that include any of the above systems or devices, and the like.

The invention may be described in the general context of computer-executable instructions, such as program modules, being executed by a computer. Generally, program modules include routines, programs, objects, components, data structures, etc. that perform particular tasks or implement particular abstract data types. The invention may also be practiced in distributed computing environments where tasks are performed by remote processing devices that are linked through a communications network or other data transmission medium. In a distributed computing environment, program modules and other data may be located in both local and remote computer storage media including memory storage devices.

With reference to Figure 10, an exemplary system for implementing the invention includes a general purpose computing device in the form of a computer 810. Components of computer 810 may include, but are not limited to, a processing unit 820, a system memory 830, and a system bus 821 that couples various system components including the system memory to the processing unit 820. The system bus 821 may be any of several types of bus structures including a memory bus or memory controller, a peripheral bus, and a local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus (also known as Mezzanine bus).

Computer 810 typically includes a variety of computer readable media. Computer readable media can be any available media that can be accessed by computer 810 and includes both volatile and non-volatile media, removable and non-removable media. By way of example, and not limitation, computer readable media may comprise computer storage media and communication media. Computer storage media includes both volatile and non-volatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can accessed by computer 810. Communication media typically embodies computer readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer readable media.

The system memory 830 includes computer storage media in the form of volatile and/or non-volatile memory such as ROM 831 and RAM 832. A basic input/output system 833 (BIOS), containing the basic routines that help to transfer information between elements within computer 810, such as during start-up, is typically stored in ROM 831. RAM 832 typically contains data and/or program modules that are immediately accessible to and/or presently being operated on by processing unit 820. By way of example, and not limitation, Figure 10 illustrates operating system 834, application programs 835, other program modules 836, and program data 837.

The computer 810 may also include other removable/non-removable, volatile/non-volatile computer storage media. By way of example only, Figure 10 illustrates a hard disk drive 840 that reads from or writes to non-removable, non-volatile magnetic media, a magnetic disk drive 851 that reads from or writes to a removable, non-volatile magnetic disk 852, and an optical disk drive 855 that reads from or writes to a removable, non-volatile optical disk 856, such as a CD-ROM or other optical media. Other removable/non-removable, volatile/non-volatile computer storage media that can be used in the exemplary operating environment include, but are not limited to, magnetic tape cassettes, flash memory cards, digital versatile disks, digital video tape, solid state RAM, solid state ROM, and the like. The hard disk drive 841 is typically connected to the system bus 821 through a non-removable memory interface such as interface 840, and magnetic disk drive 851 and optical disk drive 855 are typically connected to the system bus 821 by a removable memory interface, such as interface 850.

The drives and their associated computer storage media provide storage of computer readable instructions, data structures, program modules and other data for the computer 810. In Figure 10, for example, hard disk drive 841 is illustrated as storing operating system 844, application programs 845, other program modules 846, and program data 847. Note that these components can either be the same as or different from operating system 834, application programs 835, other program modules 836, and program data 837. Operating system 844, application programs 845, other program modules 846, and program data 847 are given different numbers here to illustrate that, at a minimum, they are different copies. A user may enter commands and information into the computer 810 through input devices such as a keyboard 862 and pointing device 861, commonly referred to as a mouse, trackball or touch pad. Other input devices (not shown) may include a microphone, joystick, game pad, satellite dish, scanner, or the like. These and other input devices are often connected to the processing unit 820 through a user input interface 860 that is coupled to the system bus, but may be connected by other interface and bus structures, such as a parallel port, game port or a universal serial bus (USB). A monitor 891 or other type of display device is also connected to the system bus 821 via an interface, such as a video interface 890. In addition to the monitor, computers may also include other peripheral output devices such as speakers 897 and printer 896, which may be connected through an output peripheral interface 895.

The computer 810 may operate in a networked environment using logical connections to one or more remote computers, such as a remote computer 880. The remote computer 880 may be a personal computer, a server, a router, a network PC, a peer device or other common network node, and typically includes many or all of the elements described above relative to the computer 810, although only a memory storage device 881 has been illustrated in Figure 10. The logical connections depicted include a LAN 871 and a WAN 873, but may also include other networks. Such networking environments are commonplace in offices, enterprise-wide computer networks, intranets and the internet.

When used in a LAN networking environment, the computer 810 is connected to the LAN 871 through a network interface or adapter 870. When used in a WAN networking environment, the computer 810 typically includes a modem 872 or other means for establishing communications over the WAN 873, such as the internet. The modem 872, which may be internal or external, may be connected to the system bus 821 via the user input interface 860, or other appropriate mechanism. In a networked environment, program modules depicted relative to the computer 810, or portions thereof, may be stored in the remote memory storage device. By way of example, and not limitation, Figure 10 illustrates remote application programs 885 as residing on memory device 881. It will be appreciated that the network connections shown are exemplary and other means of establishing a communications link between the computers may be used.

As mentioned above, while exemplary embodiments of the present invention have been described in connection with various computing devices, the underlying concepts may be applied to any computing device or system.

The various techniques described herein may be implemented in connection with hardware or software or, where appropriate, with a combination of both. Thus, the methods and apparatus of the present invention, or certain aspects or portions thereof, may take the form of program code (i.e., instructions) embodied in tangible media, such as floppy diskettes, CD-ROMs, hard drives, or any other machine-readable storage medium, wherein, when the program code is loaded into and executed by a machine, such as a computer, the machine becomes an apparatus for practicing the invention. In the case of program code execution on programmable computers, the computing device will generally include a processor, a storage medium readable by the processor (including volatile and non-volatile memory and/or storage elements), at least one input device, and at least one output device. The program(s) can be implemented in assembly or machine language, if desired. In any case, the language may be a compiled or interpreted language, and combined with hardware implementations.

The methods and apparatus of the present invention may also be practiced via communications embodied in the form of program code that is transmitted over some transmission medium, such as over electrical wiring or cabling, through fiber optics, or via any other form of transmission, wherein, when the program code is received and loaded into and executed by a machine, such as an EPROM, a gate array, a programmable logic device (PLD), a client computer, or the like, the machine becomes an apparatus for practicing the invention. When implemented on a general-purpose processor, the program code combines with the processor to provide a unique apparatus that operates to invoke the functionality of the present invention. Additionally, any storage techniques used in connection with the present invention may invariably be a combination of hardware and software.

While the present invention has been described in connection with the preferred embodiments of the various figures, it is to be understood that other similar embodiments may be used or modifications and additions may be made to the described embodiments for performing the same function of the present invention without deviating therefrom. Therefore, the present invention should not be limited to any single embodiment, but rather should be construed in breadth and scope in accordance with the appended claims.

## Claims

1. A method of generating a grid canvas, comprising:
defining a grid;
defining an object on the grid;
defining a plurality of rows and columns on the grid; and
placing the object on the grid.

2. The method according to claim 1, wherein defining the grid comprises specifying a virtual grid of row and column gridlines.

3. The method according to claim 1, wherein defining the object comprises defining at least one attribute or property for the object.

4. The method according to claim 1, wherein the step of defining an object is repeated for a plurality of objects to be placed on the grid.

5. The method according to claim 1, wherein placing the object on the grid comprises placing the objects in a gridline bounding box.

6. The method according to claim 5, wherein the gridline bounding box comprises a plurality of rows and columns that contain the object.

7. The method according to claim 1, wherein defining the grid comprises generating a plurality of virtual cells.

8. The method according to claim 7, wherein placing the object on the grid comprises placing the object so that the object spans a plurality of virtual cells.

9. The method of claim 1, further comprising placing a second object on the grid, the grid comprising a plurality of virtual cells, wherein the object and the second object inhabit at least one of the same cells of the plurality of virtual cells.

10. A method of creating a grid canvas layout, comprising:
placing an object on a display;
determining a gridline bounding box for the object; and
implementing a plurality of attributes for the object.

11. The method according to claim 10, wherein implementing the plurality of attributes comprises setting margins, height, and width for the object.

12. The method according to claim 10, further comprising determining the plurality of attributes prior to implementing the plurality of attributes

13. The method according to claim 12, wherein determining the plurality of attributes comprises comparing the extent of the gridline bounding box with a desired position to determine margins, height, and width for the object.

14. A grid canvas layout comprising a canvas on which an object may be drawn, the canvas comprising rows and columns that are sizable, the rows and columns defining virtual cells that contain the object.

15. The grid canvas layout according to claim 14, further comprising virtual gridlines that act as a coordinate system.

16. The grid canvas layout according to claim 14, further comprising a grid bounding box for the object.

17. The grid canvas layout according to claim 16, further comprising margin settings within the grid bounding box for providing desired offsets to the object.

18. A display device having rendered thereon a grid canvas layout comprising a canvas on which an object may be drawn, the canvas comprising rows and columns that are sizable, the rows and columns defining virtual cells that contain the object.

19. The display device according to claim 18, wherein the grid canvas layout further comprises virtual gridlines that act as a coordinate system.

20. The display device according to claim 18, wherein the grid canvas layout further comprises a grid bounding box for the object.

21. The display device according to claim 20, wherein the grid canvas layout further comprises margin settings within the grid bounding box for providing desired offsets to the object.

22. The display device according to claim 18, wherein a second object may be drawn on the grid canvas layout, wherein the object and the second object inhabit at least one of the same virtual cells.

23. A method in a computer system having a graphical user interface and a display, the method of generating a grid canvas, comprising:
defining a grid;
receiving an object definition signal with respect to the grid;
defining a plurality of rows and columns on the grid; and
displaying the object on the grid.

24. The method according to claim 23, wherein displaying the object comprises displaying the object in accordance with at least one attribute or property for the object.

25. The method according to claim 23, wherein the step of displaying an object is repeated for a plurality of objects to be displayed on the grid.

26. The method according to claim 23, wherein displaying the object on the grid comprises placing the objects in a gridline bounding box.

27. The method according to claim 23, wherein displaying the object on the grid comprises displaying the object so that the object spans a plurality of virtual cells.

28. The method according to claim 23, further comprising displaying a second object on the grid, the grid comprising a plurality of virtual cells, wherein the object and the second object inhabit at least one of the same cells of the plurality of virtual cells.
